(19) Europäisches Patentamt
European Patent Office
Office européen des brevets

(11) EP 4 786 504 A1

(12) EUROPEAN PATENT APPLICATION

(43) Date of publication:
**05.08.2026 Bulletin 2026/32**

(21) Application number: **25154917.6**

(22) Date of filing: **30.01.2025**

(51) International Patent Classification (IPC):
***C08F 210/16*** *(2006.01)* ***C08F 4/659*** *(2006.01)*
***C08L 23/0807*** *(2025.01)*

(52) Cooperative Patent Classification (CPC):
(C-Sets available)
**C08F 210/16; C08L 23/0815;** C08F 4/65912;
C08F 4/65916; C08L 2205/02; C08L 2205/025
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventor: **DOU, Qizheng**
**4021 Linz (AT)**

(74) Representative: **Maiwald GmbH**
**Elisenhof**
**Elisenstraße 3**
**80335 München (DE)**

# (54) POLYETHYLENE COMPOSITION

(57) A polyethylene composition comprising a polymer of ethylene that consists of a first ethylene polymer fraction and a second ethylene polymer fraction, which are both defined by their density and melt flow rate, and a further multimodal polymer of ethylene, as well as to films comprising said polyethylene composition.

EP 4 786 504 A1

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815;**
C08F 210/16, C08F 210/08, C08F 2500/12, C08F 2500/07;
C08F 210/16, C08F 210/14, C08F 210/08, C08F 2500/12, C08F 2500/04, C08F 2500/27, C08F 2500/26;
C08F 210/16, C08F 210/14, C08F 210/08, C08F 2500/12, C08F 2500/27, C08F 2500/26, C08F 2500/36

## Description

### Field of the Invention

The present invention is directed to a polyethylene composition comprising a polymer of ethylene that consists of a first ethylene polymer fraction and a second ethylene polymer fraction, which are both defined by their density and melt flow rate, and a further multimodal polymer of ethylene, as well as to films comprising said polyethylene composition.

### Background to the Invention

Polyethylene is widely applied in the manufacture of films, due to the excellent balance of mechanical, optical and sealing properties. Unimodal polyethylenes generally have good optical properties, such as low haze; however, many other properties, such as melt processibility are far from ideal and can impact both the production process (e.g. compounding and extruding), as well as the balance of properties of the final products. Multimodal polyethylene is generally easier to process, although it can be difficult to optimise the melt homogenisation of the one or more fractions, leading to inhomogeneous products, as evidenced by, for example, a high gel content. This inhomogeneity can also affect the balance of the final products.

Generally speaking, the greater the difference (e.g. molecular weight difference) between the different fractions, the more difficult it is to achieve good melt homogeneity.

Certain metallocene-catalysed multimodal medium density polyethylenes have been demonstrated to have a beneficial balance of mechanical, optical and sealing properties, although there remains scope to improve the melt homogeneity, especially of extremely bimodal compounds.

As such, there remains a need in the art to further improve the melt homogeneity, as reflected, for example, by a reduced gel content, in highly bimodal polyethylenes.

### Summary of the Invention

The present invention is based on the finding that it is possible to improve the compatibility between the high molecular weight fraction and the low molecular weight fraction in highly bimodal polyethylenes by adding small amounts of further multimodal polyethylenes.

As such, in a first aspect, the present invention is directed to polyethylene composition (PC) comprising:

a) a first polymer of ethylene (A) that consists of:

i) an amount in the range from 40.0 to 60.0 wt.-%, relative to the total weight of the polymer of ethylene (A), of a first ethylene polymer fraction (A1) having a density, determined according to ISO 1183, in the range from 955 to 975 kg/m$^3$ and a melt flow rate ($MFR_2$), determined according to ISO 1133 at a load of 2.16 kg and at a temperature of 190 °C, in the range from 100 to 600 g/10 min; and

ii) an amount in the range from 40.0 to 60.0 wt.-%, relative to the total weight of the polymer of ethylene (A), of a second ethylene polymer fraction (A2) having a density, determined according to ISO 1183, in the range from 900 to 925 kg/m$^3$ and a melt flow rate ($MFR_2$), determined according to ISO 1133 at a load of 2.16 kg and at a temperature of 190 °C, in the range from 0.00001 to 0.008 g/10 min,

wherein the polymer of ethylene (A) has a density, determined according to ISO 1183, in the range from 932 to 955 kg/m$^3$ and a melt flow rate ($MFR_2$), determined according to ISO 1133 at a load of 2.16 kg and at a temperature of 190 °C, in the range from 0.05 to 0.80 g/10 min,

wherein the melt flow rate ($MFR_2$) of the first ethylene polymer fraction (A1) divided by the melt flow rate ($MFR_2$) of the second ethylene polymer fraction (A2) [$MFR_2$(A1) ÷ $MFR_2$(A2)] is in the range from $2.0\times10^6$ to $60\times10^6$, and

b) a second polymer of ethylene (B) that consists of:

i) an amount in the range from 30.0 to 70.0 wt.-%, relative to the total weight of the polymer of ethylene (B), of a first ethylene polymer fraction (B1) having a density, determined according to ISO 1183, in the range from 955 to 975 kg/m$^3$ and a melt flow rate ($MFR_2$), determined according to ISO 1133 at a load of 2.16 kg and at a temperature of 190 °C; and

ii) an amount in the range from 30.0 to 70.0 wt.-%, relative to the total weight of the polymer of ethylene (B), of a second ethylene polymer fraction (B2) having a density, determined according to ISO 1183, in the range from 900 to 925 kg/m$^3$ and a melt flow rate ($MFR_2$), determined according to ISO 1133 at a load of 2.16 kg and at a

temperature of 190 °C,

wherein the polymer of ethylene (B) has a density, determined according to ISO 1183, in the range from 932 to 955 kg/$m^3$ and a melt flow rate ($MFR_2$), determined according to ISO 1133 at a load of 2.16 kg and at a temperature of 190 °C, in the range from 0.05 to 3.0 g/10 min,
wherein the melt flow rate ($MFR_2$) of the first ethylene polymer fraction (B1) divided by the melt flow rate ($MFR_2$) of the second ethylene polymer fraction (B2) [$MFR_2$(B1) ÷ $MFR_2$(B2)] is in the range from 1.0 ×10° to 1.5×$10^6$,

wherein the combined content of the first polymer of ethylene (A) and the second polymer of ethylene (B) is at least 90.0 wt.-%, relative to the total weight of the polyethylene composition (PC).

In a second aspect, the present invention is directed to a film (F) comprising at least 90 wt.-%, relative to the total weight of the film (F), of the polyethylene composition (PC) of the first aspect.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following, amounts are given in % by weight (wt.-%) unless it is stated otherwise.

An ethylene homopolymer is a polymer that essentially consists of ethylene monomer units. Due to impurities especially during commercial polymerization processes, an ethylene homopolymer can comprise up to 0.1 mol% comonomer units, preferably up to 0.05 mol% comonomer units and most preferably up to 0.01 mol% comonomer units.

An ethylene copolymer is a copolymer of ethylene monomer units and comonomer units, preferably selected from $C_3$-$C_8$ alpha-olefins. Ethylene copolymers can comprise comonomer units from one or more comonomers different in their amounts of carbon atoms. In the context of the present invention, the term "copolymer of A and B" means that only units derived from A and B may be present, excluding, for example, terpolymers containing units derived from A, B and C.

An ethylene terpolymer is an ethylene copolymer, as described above, which consists of ethylene and two different comonomer units, typically selected from $C_3$-$C_8$ alpha-olefins.

In the context of the present invention, the term "polymer of ethylene" may refer to ethylene homopolymers, ethylene copolymer, ethylene terpolymers and any other polymer that is at least 50 wt.-% ethylene.

Multimodal polymers are polymers having a multimodal distribution of one or more properties. Multimodal ethylene polymers may typically be multimodal with respect to comonomer content or multimodal with respect to molecular weight (as seen through the melt flow rates of the respective fractions and the final composition).

Bimodal polymers are polymers having a bimodal distribution of one or more properties. Bimodal random ethylene polymers may typically be bimodal with respect to comonomer content or bimodal with respect to molecular weight (as seen through the melt flow rates of the first fraction and the final composition).

The present invention will now be described in more detail.

## Detailed Description

In a first aspect, the present invention is directed to a polyethylene composition (PC) comprising:

a) a first polymer of ethylene (A), and
b) a second polymer of ethylene (B),

wherein the combined content of the first polymer of ethylene (A) and the second polymer of ethylene (B) is at least 90.0 wt.-%, relative to the total weight of the polyethylene composition (PC).

In addition to the first polymer of ethylene (A) and the second polymer of ethylene (B), the polyethylene composition (PC) may further comprise further additive(s) (Ad). The skilled practitioner would be able to select suitable additives that are well known in the art.

The further additive(s) (Ad) are preferably selected from antioxidants, process stabilizers, UV-stabilizers, pigments other than carbon black, fillers, antistatic additives, antiblock agents, nucleating agents, acid scavengers, slip agent, polymer processing agent (PPA) and mixtures thereof.

It is understood that the content of additives (Ad), given with respect to the total weight of the polyethylene composition (PC), includes any carrier polymers used to introduce the additives to said polyethylene composition (PC), i.e. masterbatch carrier polymers. Any carrier polymers used to introduce the carbon black (CB) to the polyethylene composition (PC) are also included in the content of additives (A). An example of such a carrier polymer would be a polyethylene, such as HDPE, LDPE, or LLDPE, in the form of powder.
If present, the content of the further additive(s) is in the range from 0.0 to 10.0 wt.-%, more preferably in the range from 0.0 to 5.0 wt.-%, most preferably in the range from 0.0 to 3.0 wt.-%, relative to the total weight of the polyethylene composition (PC).
It is preferred that the polyethylene composition (PC) comprises, more preferably consists of:

a) from 80.0 to 99.0 wt.-%, more preferably from 85.0 to 97.0 wt.-%, most preferably from 88.0 to 96.0 wt.-%, relative to the total weight of the polyethylene composition (PC), of the first polymer of ethylene (A)
b) from 1.0 to 20.0 wt.-%, more preferably from 3.0 to 15.0 wt.-%, most preferably from 4.0 to 12.0 wt.-%, relative to the total weight of the polyethylene composition (PC), of the second polymer of ethylene (B); and
c) optionally, from 0.0 to 10.0 wt.-%, more preferably from 0.0 to 5.0 wt.-%, most preferably from 0.0 to 3.0 wt.-%, relative to the total weight of the polyethylene composition (PC), of one or more further additives (Ad).

In one embodiment, the polyethylene composition (PC) comprises, more preferably consists of:

a) from 80.0 to 99.0 wt.-%, relative to the total weight of the polyethylene composition (PC), of the first polymer of ethylene (A)
b) from 1.0 to 20.0 wt.-%, relative to the total weight of the polyethylene composition (PC), of the second polymer of ethylene (B); and
c) optionally, from 0.0 to 10.0 wt.-%, relative to the total weight of the polyethylene composition (PC), of one or more further additives (Ad).

In a further embodiment, the polyethylene composition (PC) comprises, more preferably consists of

a) from 85.0 to 97.0 wt.-%, relative to the total weight of the polyethylene composition (PC), of the first polymer of ethylene (A)
b) from 3.0 to 15.0 wt.-%, relative to the total weight of the polyethylene composition (PC), of the second polymer of ethylene (B); and
c) optionally, from 0.0 to 5.0 wt.-%, relative to the total weight of the polyethylene composition (PC), of one or more further additives (Ad).

In a final embodiment, the polyethylene composition (PC) comprises, more preferably consists of

a) from 88.0 to 96.0 wt.-%, relative to the total weight of the polyethylene composition (PC), of the first polymer of ethylene (A)
b) from 4.0 to 12.0 wt.-%, relative to the total weight of the polyethylene composition (PC), of the second polymer of ethylene (B); and
c) optionally, from 0.0 to 3.0 wt.-%, relative to the total weight of the polyethylene composition (PC), of one or more further additives (Ad).

The combined content of the first polymer of ethylene (A) and the second polymer of ethylene (B) is at least 90.0 wt.-%, more preferably at least 95 wt.-%, most preferably at least 97.0 wt.-%, relative to the total weight of the polyethylene composition (PC).

**First polymer of ethylene (A)**

One essential component of the polyethylene composition (PC) is the first polymer of ethylene (A).
The first polymer of ethylene (A) is preferably present in an amount in the range from 80.0 to 99.0 wt.-%, more preferably from 85.0 to 97.0 wt.-%, most preferably from 88.0 to 96.0 wt.-%, relative to the total weight of the polyethylene composition (PC).
The first polymer of ethylene (A) has a density, determined according to ISO 1183, in the range from 932 to 955 kg/$m^3$, more preferably in the range from 935 to 950 kg/$m^3$, most preferably in the range from 938 to 945 kg/$m^3$.
The first polymer of ethylene (A) has a melt flow rate ($MFR_2$), determined according to ISO 1133 at a load of 2.16 kg and at a temperature of 190 °C, in the range from 0.05 to 0.80 g/10 min, more preferably in the range from 0.06 to 3.00

g/10 min, most preferably in the range from 0.50 to 1.00 g/10 min.

The first polymer of ethylene (A) preferably has a melt flow rate ($MFR_5$), determined according to ISO 1133 at a load of 2.16 kg and at a temperature of 190 °C, in the range from 0.30 to 0.50 g/10 min, more preferably in the range from 0.40 to 0.50 g/10 min, most preferably in the range from 0.10 to 0.30 g/10 min.

The first polymer of ethylene (A) preferably has a melt flow rate ($MFR_{21}$), determined according to ISO 1133 at a load of 21.6 kg and at a temperature of 190 °C, in the range from 5.0 to 50.0 g/10 min, more preferably in the range from 8.0 to 40.0 g/10 min, yet more preferably in the range from 10.0 to 30.0 g/10 min, most preferably in the range from 12.0 to 20.0 g/10 min.

The first polymer of ethylene (A) preferably has a flow rate ratio ($FRR_{21/2}$), determined according to ISO 1133 at a temperature of 190 °C and at loads of 21.6 kg and 2.16 kg, in the range from 50 to 150, more preferably in the range from 60 to 120, most preferably in the range from 70 to 110.

The first polymer of ethylene (A) preferably has a weight average molecular weight (Mw), determined according to the method given in the measurement methods, of at least 100,000 g/mol, more preferably in the range from 110,000 to 200,000 g/mol, most preferably in the range from 125,000 to 180,000 g/mol.

The first polymer of ethylene (A) preferably has a z average molecular weight (Mz), determined according to the method given in the measurement methods, in the range from 300,000 to 800,000 g/mol, more preferably in the range from 350,000 to 650,000 g/mol, more preferably in the range from 400,000 to 550,000 g/mol.

The first polymer of ethylene (A) preferably has a molecular weight distribution (Mw/Mn), determined according to the method given in the measurement methods, in the range from 10.0 to 18.0, more preferably in the range from 11.0 to 16.0, most preferably in the range from 11.5 to 15.0

The first polymer of ethylene (A) preferably has a molecular weight distribution (Mz/Mw), determined according to the method given in the measurement methods, in the range from 2.0 to 4.5, more preferably in the range from 2.2 to 4.0, most preferably in the range from 2.5 to 3.8.

The first polymer of ethylene (A) preferably has a ratio of $FRR_{21/2}$, determined according to ISO 1133 at a temperature of 190 °C and at loads of 21.6 kg and 2.16 kg, to molecular weight distribution (Mw/Mn), determined according to the method given in the measurement methods, [$FRR_{21/2}$/(Mw/Mn)] in the range from 5.0 to 12.0, more preferably in the range from 6.0 to 11.0, most preferably in the range from 7.0 to 10.0.

The first polymer of ethylene (A) preferably has a ratio of $FRR_{21/2}$, determined according to ISO 1133 at a temperature of 190 °C and at loads of 21.6 kg and 2.16 kg, to molecular weight distribution (Mz/Mw), determined according to the method given in the measurement methods, [$FRR_{21/2}$/(Mz/Mw)] in the range from 15.0 to 40.0, more preferably in the range from 20.0 to 35.0, most preferably in the range from 22.0 to 32.0.

The first polymer of ethylene (A) preferably consists of monomer units of ethylene and one or more alpha olefins selected from the group consisting of $C_3$ to $C_8$ alpha olefins, more preferably selected from the group consisting of $C_4$ to $C_6$ alpha olefins.

It is particularly preferred that the first polymer of ethylene (A) consists of monomer units of ethylene, 1-hexene, and optionally 1-butene.

The first polymer of ethylene (A) preferably has a 1-butene (C4) content, determined by quantitative $^{13}$C-NMR spectroscopic analysis, in the range from 0.0 to 0.5 mol-%, more preferably in the range from 0.0 to 0.3 mol-%, most preferably in the range from 0.0 to 0.1 mol-%.

The first polymer of ethylene (A) preferably has a 1-hexene (C6) content, determined by quantitative $^{13}$C-NMR spectroscopic analysis, in the range from 0.5 to 2.0 mol-%, more preferably in the range from 0.7 to 1.5 mol-%, most preferably in the range from 0.9 to 1.2 mol-%.

The first polymer of ethylene (A) consists of:

a) an amount in the range from 40.0 to 60.0 wt.-%, relative to the total weight of the first polymer of ethylene (A), of the first ethylene polymer fraction (A1); and
b) an amount in the range from 40.0 to 60.0 wt.-%, relative to the total weight of the first polymer of ethylene (A), of the second ethylene polymer fraction (A2).

It is preferred that the first polymer of ethylene (A) consists of:

a) an amount in the range from 42.0 to 58.0 wt.-%, relative to the total weight of the first polymer of ethylene (A), of the first ethylene polymer fraction (A1); and
b) an amount in the range from 42.0 to 58.0 wt.-%, relative to the total weight of the first polymer of ethylene (A), of the second ethylene polymer fraction (A2).

It is further preferred that the first polymer of ethylene (A) consists of:

a) an amount in the range from 45.0 to 55.0 wt.-%, relative to the total weight of the first polymer of ethylene (A), of the first ethylene polymer fraction (A1); and
b) an amount in the range from 45.0 to 55.0 wt.-%, relative to the total weight of the first polymer of ethylene (A), of the second ethylene polymer fraction (A2).

The first ethylene polymer fraction (A1) has a density, determined according to ISO 1183, in the range from 955 to 975 kg/$m^3$, more preferably in the range from 957 to 974 kg/$m^3$, yet more preferably in the range from 960 to 973 kg/$m^3$, most preferably in the range from 962 to 972 kg/$m^3$.
The first ethylene polymer fraction (A1) has a melt flow rate ($MFR_2$), determined according to ISO 1133 at a load of 2.16 kg and at a temperature of 190 °C, in the range from 100 to 600 g/10 min, more preferably in the range from 150 to 500 g/10 min, yet more preferably in the range from 200 to 450 g/10 min, even more preferably in the range from 250 to 420 g/10 min, most preferably in the range from 300 to 400 g/10 min.
It is preferred that the first ethylene polymer fraction (A1) is a homopolymer of ethylene or a copolymer of ethylene and one or more comonomers selected from the group consisting of $C_4$ to $C_8$ alpha olefins, wherein the first ethylene polymer fraction (A1) has a comonomer content, determined by quantitative $^{13}$C-NMR spectroscopic analysis, in the range from 0.0 to 0.5 mol-%, more preferably in the range from 0.0 to 0.3 mol-%, most preferably in the range from 0.0 to 0.2 mol-%.
The second ethylene polymer fraction (A2) has a density, determined according to ISO 1183, in the range from 900 to 925 kg/$m^3$, more preferably in the range from 905 to 920 kg/$m^3$, yet more preferably in the range from 906 to 918 kg/$m^3$, most preferably in the range from 908 to 916 kg/$m^3$.
The second ethylene polymer fraction (A2) has a melt flow rate ($MFR_2$), determined according to ISO 1133 at a load of 2.16 kg and at a temperature of 190 °C, in the range from 0.00001 to 0.00800 g/10 min, more preferably in the range from 0.00003 to 0.00500 g/10 min, yet more preferably in the range from 0.00005 to 0.00100 g/10 min, most preferably in the range from 0.00006 to 0.00015 g/10 min.
It is preferred that second ethylene polymer fraction (A2) is a copolymer of ethylene and one or more comonomers selected from the group consisting of $C_4$ to $C_8$ alpha olefins, wherein the second ethylene polymer fraction (A2) has a comonomer content, determined by quantitative $^{13}$C-NMR spectroscopic analysis, in the range from 1.0 to 4.0 mol-%, more preferably in the range from 1.4 to 3.0 mol-%, most preferably in the range from 1.8 to 2.4 mol-%.
The melt flow rate ($MFR_2$) of the first ethylene polymer fraction (A1) divided by the melt flow rate ($MFR_2$) of the second ethylene polymer fraction (A2) [$MFR_2$(A1) ÷ $MFR_2$(A2)] is in the range from $2.0\times10^6$ to $60\times10^6$, more preferably in the range from $2.5\times10^6$ to $20\times10^6$, most preferably in the range from $3.0\times10^6$ to $10\times10^6$.
It is preferred that the density of the first ethylene polymer fraction (A1) minus the density of the second ethylene polymer fraction (A2) [dens(A1) - dens(A2)] is in the range from 50.0 kg/$m^3$ to 75.0 kg/$m^3$, more preferably in the range from 55.0 kg/$m^3$ to 70.0 kg/$m^3$, most preferably in the range from 57.0 kg/$m^3$ to 65.0 kg/$m^3$.
In a particular embodiment, the first ethylene polymer fraction (A1) consists of two ethylene polymer subfractions, a first ethylene polymer subfraction (A1a) and a second ethylene polymer subfraction (A1b).
In this embodiment, the first ethylene polymer fraction (A1) consists of:

a) an amount in the range from 20.0 to 30.0 wt.-%, relative to the total weight of the first polymer of ethylene (A), of the first ethylene polymer subfraction (A1a); and
b) an amount in the range from 20.0 to 30.0 wt.-%, relative to the total weight of the first polymer of ethylene (A), of the second ethylene polymer subfraction (A1b).

It is preferred that the first ethylene polymer fraction (A1) consists of:

a) an amount in the range from 20.0 to 28.0 wt.-%, relative to the total weight of the first polymer of ethylene (A), of the first ethylene polymer subfraction (A1a); and
b) an amount in the range from 22.0 to 30.0 wt.-%, relative to the total weight of the first polymer of ethylene (A), of the second ethylene polymer subfraction (A1b).

It is further preferred that the first ethylene polymer fraction (A1) consists of:

a) an amount in the range from 20.0 to 25.0 wt.-%, relative to the total weight of the first polymer of ethylene (A), of the first ethylene polymer subfraction (A1a); and
b) an amount in the range from 25.0 to 30.0 wt.-%, relative to the total weight of the first polymer of ethylene (A), of the second ethylene polymer subfraction (A1b).

The first ethylene polymer subfraction (A1a) preferably has a density, determined according to ISO 1183, in the

range from 945 to 975 kg/$m^3$, more preferably in the range from 950 to 968 kg/$m^3$, most preferably in the range from 960 to 967 kg/$m^3$.

The first ethylene polymer subfraction (A1a) preferably has a melt flow rate ($MFR_2$), determined according to ISO 1133 at a load of 2.16 kg and at a temperature of 190 °C, in the range from 100 to 400 g/10 min, more preferably in the range from 150 to 350 g/10 min, yet more preferably in the range from 180 to 300 g/10 min, even more preferably in the range from 190 to 280 g/10 min, most preferably in the range from 200 to 250 g/10 min.

The second ethylene polymer subfraction (A1b) preferably has a density, determined according to ISO 1183, in the range from 960 to 980 kg/$m^3$, more preferably in the range from 965 to 980 kg/$m^3$, most preferably in the range from 970 to 978 kg/$m^3$.

The second ethylene polymer subfraction (A1b) preferably has a melt flow rate ($MFR_2$), determined according to ISO 1133 at a load of 2.16 kg and at a temperature of 190 °C, in the range from 100 to 1500 g/10 min, more preferably in the range from 200 to 1200 g/10 min, yet more preferably in the range from 250 to 1200 g/10 min, most preferably in the range from 280 to 800 g/10 min.

It is preferred that the first polymer of ethylene (A) has been produced in the presence of a single-site catalyst, more preferably a metallocene catalyst, most preferably a metallocene catalyst comprising organometallic compound (C).

A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

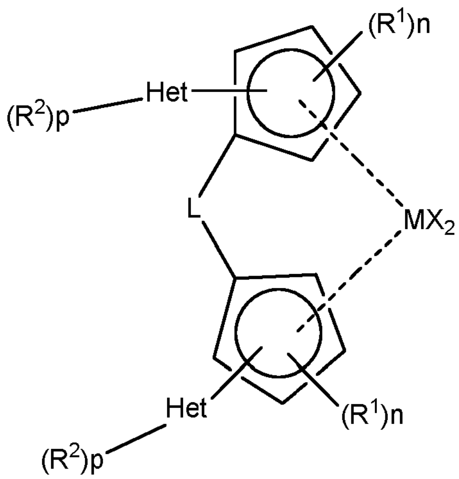

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

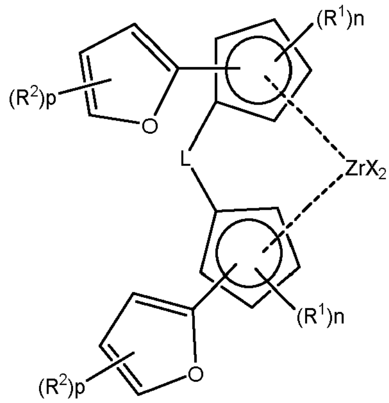

(I′)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (I) are

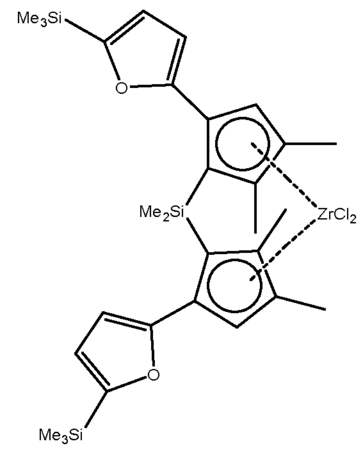

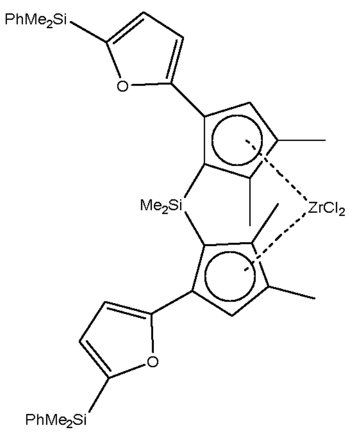

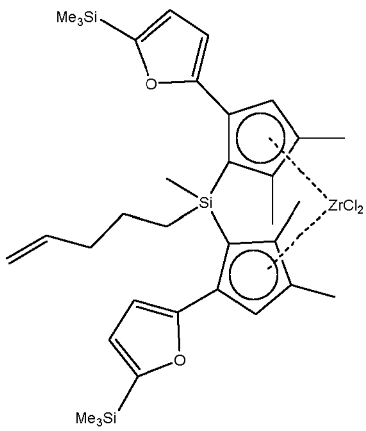

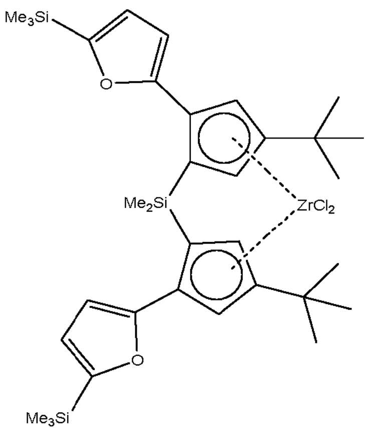

Most preferably the complex dimethylsilanediylbis[2-(5-trimethylsilylfuran-2-yl)-4,5-dimethylcyclopentadien-1-yl] zirconium dichloride is used.
More preferably the first ethylene polymer fraction (A1) and the second ethylene polymer fraction (A2) of the first polymer of ethylene (A) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

## Second polymer of ethylene (B)

Another essential component of the polyethylene composition (PC) is the second polymer of ethylene (B).
The second polymer of ethylene (B) is preferably present in an amount in the range from 1.0 to 20.0 wt.-%, more preferably from 3.0 to 15.0 wt.-%, most preferably from 4.0 to 12.0 wt.-%, relative to the total weight of the polyethylene composition (PC).
The second polymer of ethylene (B) has a density, determined according to ISO 1183, in the range from 932 to 955 kg/$m^3$, more preferably in the range from 935 to 950 kg/$m^3$, most preferably in the range from 938 to 945 kg/$m^3$.
The second polymer of ethylene (B) has a melt flow rate ($MFR_2$), determined according to ISO 1133 at a load of 2.16 kg and at a temperature of 190 °C, in the range from 0.05 to 3.00 g/10 min, more preferably in the range from 0.10 to 1.00 g/10 min, most preferably in the range from 0.20 to 0.60 g/10 min.
The first polymer of ethylene (A) preferably has a melt flow rate ($MFR_5$), determined according to ISO 1133 at a load of 2.16 kg and at a temperature of 190 °C, in the range from 0.30 to 10.0 g/10 min, more preferably in the range from 0.50 to 5.0 g/10 min, most preferably in the range from 0.70 to 3.0 g/10 min.
The second polymer of ethylene (B) preferably has a melt flow rate ($MFR_{21}$), determined according to ISO 1133 at a load of 21.6 kg and at a temperature of 190 °C, in the range from 5.0 to 100.0 g/10 min, more preferably in the range from 10.0 to 80.0 g/10 min, yet more preferably in the range from 20.0 to 60.0 g/10 min, most preferably in the range from 30.0 to 40.0 g/10 min.
The second polymer of ethylene (B) preferably has a flow rate ratio ($FRR_{21/2}$), determined according to ISO 1133 at a temperature of 190 °C and at loads of 21.6 kg and 2.16 kg, in the range from 50 to 150, more preferably in the range from 60 to 120, most preferably in the range from 70 to 110.
The second polymer of ethylene (B) preferably consists of monomer units of ethylene and one or more alpha olefins selected from the group consisting of $C_3$ to $C_8$ alpha olefins, more preferably selected from the group consisting of $C_4$ to $C_6$ alpha olefins.
It is particularly preferred that the second polymer of ethylene (B) consists of monomer units of ethylene, 1-butene, and 1-hexene.
The second polymer of ethylene (B) preferably has a 1-butene (C4) content, determined by quantitative $^{13}C$-NMR spectroscopic analysis, in the range from 0.1 to 1.5 mol-%, more preferably in the range from 0.2 to 1.0 mol-%, most preferably in the range from 0.3 to 0.7 mol-%.
The second polymer of ethylene (B) preferably has a 1-hexene (C6) content, determined by quantitative $^{13}C$-NMR spectroscopic analysis, in the range from 0.5 to 2.0 mol-%, more preferably in the range from 0.7 to 1.5 mol-%, most preferably in the range from 0.9 to 1.2 mol-%.
The second polymer of ethylene (B) consists of:

a) an amount in the range from 40.0 to 60.0 wt.-%, relative to the total weight of the second polymer of ethylene (B), of the first ethylene polymer fraction (B1); and
b) an amount in the range from 40.0 to 60.0 wt.-%, relative to the total weight of the second polymer of ethylene (B), of the second ethylene polymer fraction (B2).

It is preferred that the second polymer of ethylene (B) consists of:

a) an amount in the range from 42.0 to 58.0 wt.-%, relative to the total weight of the second polymer of ethylene (B), of the first ethylene polymer fraction (B1); and
b) an amount in the range from 42.0 to 58.0 wt.-%, relative to the total weight of the second polymer of ethylene (B), of the second ethylene polymer fraction (B2).

It is further preferred that the second polymer of ethylene (B) consists of:

a) an amount in the range from 45.0 to 55.0 wt.-%, relative to the total weight of the second polymer of ethylene (B), of the first ethylene polymer fraction (B1); and
b) an amount in the range from 45.0 to 55.0 wt.-%, relative to the total weight of the second polymer of ethylene (B), of the second ethylene polymer fraction (B2).

The first ethylene polymer fraction (B1) has a density, determined according to ISO 1183, in the range from 955 to

975 kg/m$^3$, more preferably in the range from 957 to 974 kg/m$^3$, yet more preferably in the range from 960 to 973 kg/m$^3$, most preferably in the range from 962 to 972 kg/m$^3$.

The first ethylene polymer fraction (B1) has a melt flow rate ($MFR_2$), determined according to ISO 1133 at a load of 2.16 kg and at a temperature of 190 °C, in the range from 100 to 600 g/10 min, more preferably in the range from 200 to 550 g/10 min, yet more preferably in the range from 300 to 500 g/10 min, even more preferably in the range from 350 to 480 g/10 min, most preferably in the range from 370 to 470 g/10 min.

It is preferred that the first ethylene polymer fraction (B1) is a homopolymer of ethylene or a copolymer of ethylene and one or more comonomers selected from the group consisting of $C_4$ to $C_8$ alpha olefins, wherein the first ethylene polymer fraction (B1) has a comonomer content, determined by quantitative $^{13}$C-NMR spectroscopic analysis, in the range from 0.0 to 0.5 mol-%, more preferably in the range from 0.0 to 0.3 mol-%, most preferably in the range from 0.0 to 0.2 mol-%. Most preferably the first ethylene polymer fraction (B1) is a homopolymer of ethylene.

The second ethylene polymer fraction (B2) has a density, determined according to ISO 1183, in the range from 900 to 925 kg/m$^3$, more preferably in the range from 905 to 922 kg/m$^3$, yet more preferably in the range from 910 to 920 kg/m$^3$, most preferably in the range from 912 to 918 kg/m$^3$.

The second ethylene polymer fraction (B2) has a melt flow rate ($MFR_2$), determined according to ISO 1133 at a load of 2.16 kg and at a temperature of 190 °C, in the range from 0.00001 to 0.00800 g/10 min, more preferably in the range from 0.00010 to 0.00600 g/10 min, yet more preferably in the range from 0.00030 to 0.00400 g/10 min, most preferably in the range from 0.00050 to 0.00200 g/10 min.

It is preferred that second ethylene polymer fraction (B2) is a copolymer of ethylene and one or more comonomers selected from the group consisting of $C_4$ to $C_8$ alpha olefins, wherein the second ethylene polymer fraction (B2) has a total comonomer content, determined by quantitative $^{13}$C-NMR spectroscopic analysis, in the range from 1.0 to 5.0 mol-%, more preferably in the range from 2.0 to 4.0 mol-%, most preferably in the range from 2.5 to 3.0 mol-%.

Most preferably, the second ethylene polymer fraction (B2) is a terpolymer of ethylene, 1-butene and 1-hexene, having a 1-butene content, determined by quantitative $^{13}$C-NMR spectroscopic analysis, in the range from 0.2 to 3.0 mol-%, more preferably in the range from 0.4 to 2.0 mol-%, most preferably in the range from 0.6 to 1.4 mol-%, and/or a 1-hexene content, determined by quantitative $^{13}$C-NMR spectroscopic analysis, in the range from 1.0 to 4.0 mol-%, more preferably in the range from 1.4 to 3.0 mol-%, most preferably in the range from 1.8 to 2.4 mol-%.

The melt flow rate ($MFR_2$) of the first ethylene polymer fraction (B1) divided by the melt flow rate ($MFR_2$) of the second ethylene polymer fraction (B2) [$MFR_2$(B1) ÷ $MFR_2$(B2)] is in the range from 1.0×10° to 1.5×10$^6$, more preferably in the range from 1.0×10$^2$ to 1.0×10$^6$, most preferably in the range from 1.0×10$^4$ to 0.6×10$^6$.

It is preferred that the density of the first ethylene polymer fraction (B1) minus the density of the second ethylene polymer fraction (B2) [dens(B1) - dens(B2)] is in the range from 30.0 kg/m$^3$ to 60.0 kg/m$^3$, more preferably in the range from 40.0 kg/m$^3$ to 58.0 kg/m$^3$, most preferably in the range from 48.0 kg/m$^3$ to 56.0 kg/m$^3$.

It is preferred that the second polymer of ethylene (B) has been produced in the presence of a Ziegler Natta catalyst.

**Polyethylene composition (PC)**

It is preferred that the polyethylene composition (PC) has a melting temperature (Tm), determined by differential scanning calorimetry (DSC) according to ISO 11357 / part 3 /method C2, in the range from 120 to 135 °C, more preferably in the range from 123 to 132 °C, most preferably in the range from 125 to 130 °C.

It is preferred that the polyethylene composition (PC) has an enthalpy of fusion (ΔHm), determined by differential scanning calorimetry (DSC) according to ISO 11357 / part 3 /method C2, in the range from 160 to 220 J/g, more preferably in the range from 170 to 210 J/g, most preferably in the range from 172 to 200 J/g.

It is preferred that the polyethylene composition (PC) has a crystallization temperature (Tc), determined by differential scanning calorimetry (DSC) according to ISO 11357 / part 3 /method C2, in the range from 110 to 125 °C, more preferably in the range from 112 to 122 °C, most preferably in the range from 114 to 120 °C.

It is preferred that the polyethylene composition (PC) has an enthalpy of crystallization (ΔHc), determined by differential scanning calorimetry (DSC) according to ISO 11357 / part 3 /method C2, in the range from 160 to 220 J/g, more preferably in the range from 170 to 210 J/g, most preferably in the range from 175 to 200 J/g.

It is preferred that the polyethylene composition (PC) has a shear thinning index $SHI_{2.7/210}$, determined according to ISO 6721-1 and 6721-10, in the range from 20 to 60, more preferably in the range from 25 to 50, most preferably in the range from 30 to 45.

It is preferred that the polyethylene composition (PC) has a shear thinning index $SHI_{5/300}$, determined according to ISO 6721-1 and 6721-10, in the range from 40 to 100, more preferably in the range from 45 to 85, most preferably in the range from 50 to 75.

It is preferred that the polyethylene composition (PC) has a complex viscosity $eta_{0.05}$, determined according to ISO 6721-1 and 6721-10, in the range from 40,000 to 100,000, more preferably in the range from 50,000 to 90,000, most

preferably in the range from 60,000 to 80,000.

It is preferred that the polyethylene composition (PC) has a complex viscosity $eta_{300}$, determined according to ISO 6721-1 and 6721-10, in the range from 800 to 1500, more preferably in the range from 900 to 1300, most preferably in the range from 1000 to 1100.

It is preferred that the polyethylene composition (PC) has a gel index, determined according to the method given in the measurement methods, in the range from 5,000 to 30,000, more preferably in the range from 10,000 to 27,000, most preferably in the range from 15,000 to 24,000.

It is preferred that the polyethylene composition (PC) has a tensile modulus in the machine direction (TM-MD), determined according to ISO 527-3 on a 40 μm blown film specimen, in the range from 400 to 900 MPa, more preferably in the range from 450 to 800 MPa, most preferably in the range from 500 to 700 MPa.

It is preferred that the polyethylene composition (PC) has a tensile modulus in the transverse direction (TM-TD), determined according to ISO 527-3 on a 40 μm blown film specimen, in the range from 650 to 1500 MPa, more preferably in the range from 670 to 1200 MPa, most preferably in the range from 680 to 1000 MPa.

It is preferred that the polyethylene composition (PC) has a normalised energy to peak force, determined according to ISO 7765-2 on a 40 μm blown film specimen, in the range from 12.0 to 35.0 J/mm, more preferably in the range from 17.0 to 30.0 J/mm, most preferably in the range from 20.0 to 27.0 J/mm.

It is preferred that the polyethylene composition (PC) has an energy to break, determined according to ASTM D5748 on a 40 μm blown film specimen, in the range from 1.80 to 3.00 J, more preferably in the range from 1.90 to 2.70 J, most preferably in the range from 2.00 to 2.50 J.

It is preferred that the polyethylene composition (PC) has a force at break, determined according to ASTM D5748 on a 40 μm blown film specimen, in the range from 46.0 to 70.0 N, more preferably in the range from 47.0 to 60.0 N, most preferably in the range from 48.0 to 55.0 N.

It is preferred that the polyethylene composition (PC) has an energy to max force determined according to ASTM D5748 on a 40 μm blown film specimen, in the range from 1.30 to 2.00 J, more preferably in the range from 1.33 to 1.80 J, most preferably in the range from 1.36 to 1.60 J.

It is preferred that the polyethylene composition (PC) has a max force, determined according to ASTM D5748 on a 40 μm blown film specimen, in the range from 51.0 to 70.0 N, more preferably in the range from 51.5 to 65.0 N, most preferably in the range from 52.0 to 60.0 N.

It is preferred that the polyethylene composition (PC) has a relative tear resistance in the transverse direction (Tear-TD), determined according to ISO 6383-2 on a 40 μm blown film specimen, in the range from 200 to 400 N/mm, more preferably in the range from 210 to 340 N/mm, most preferably in the range from 220 to 280 N/mm.

It is preferred that the polyethylene composition (PC) has a clarity value, determined according to ASTM D1003 on a 40 μm blown film specimen, in the range from 15.0 to 50.0%, more preferably in the range from 20.0 to 40.0%, most preferably in the range from 25.0 to 30.0%.

It is preferred that the polyethylene composition (PC) has a haze value, determined according to ASTM D1003 on a 40 μm blown film specimen, in the range from 40.0 to 75.0%, more preferably in the range from 50.0 to 72.0%, most preferably in the range from 60.0 to 69.0%.

It is preferred that the polyethylene composition (PC) has a diffuse luminous transmittance, determined according to ASTM D1003 on a 40 μm blown film specimen, in the range from 40.0 to 70.0%, more preferably in the range from 50.0 to 68.0%, most preferably in the range from 57.0 to 66.0%.

It is preferred that the polyethylene composition (PC) has a total luminous transmittance, determined according to ASTM D1003 on a 40 μm blown film specimen, in the range from 80.0 to 98.0%, more preferably in the range from 85.0 to 96.0%, most preferably in the range from 90.0 to 94.0%.

It is preferred that the polyethylene composition (PC) has a sealing initiation temperature (SIT), determined according to the method specified in the measurement methods on a 40 μm blown film specimen, in the range from 115 to 130 °C, more preferably in the range from 118 to 127 °C, most preferably in the range from 120 to 125 °C.

It is preferred that the polyethylene composition (PC) has a hot tack force (HTF), determined according to the method specified in the measurement methods on a 40 μm blown film specimen, in the range from 1.40 to 3.00 N, more preferably in the range from 1.50 to 2.50 N, most preferably in the range from 1.60 to 2.00 N.

It is preferred that the polyethylene composition (PC) has a hot tack temperature (HTT), determined according to the method specified in the measurement methods on a 40 μm blown film specimen, in the range from 115 to 130 °C, more preferably in the range from 118 to 127 °C, most preferably in the range from 120 to 125 °C.

Film

In a second aspect, the present invention is directed to a film (F) comprising at least 90 wt.-%, relative to the total weight of the film (F), of the polyethylene composition (PC) of the first aspect.

It is preferred that the film (F) comprises at least 95 wt.-%, more preferably at least 98 wt.-% of the polyethylene

composition (PC) of the first aspect.

In some embodiments, the film (F) consists of the polyethylene composition (PC) of the first aspect.

It is preferred that the film (F) is a cast film or a blown film, most preferably a blown film.

The film (F) preferably has a thickness in the range from 20 to 150 μm, more preferably in the range from 30 to 100 μm, most preferably in the range from 40 to 70 μm.

It is preferred that the film (F) has a tensile modulus in the machine direction (TM-MD), determined according to ISO 527-3, in the range from 400 to 900 MPa, more preferably in the range from 450 to 800 MPa, most preferably in the range from 500 to 700 MPa.

It is preferred that the film (F) has a tensile modulus in the transverse direction (TM-TD), determined according to ISO 527-3, in the range from 650 to 1500 MPa, more preferably in the range from 670 to 1200 MPa, most preferably in the range from 680 to 1000 MPa.

It is preferred that the film (F) has a normalised energy to peak force, determined according to ISO 7765-2, in the range from 12.0 to 35.0 J/mm, more preferably in the range from 17.0 to 30.0 J/mm, most preferably in the range from 20.0 to 27.0 J/mm.

It is preferred that the film (F) has an energy to break, determined according to ASTM D5748, in the range from 1.80 to 3.00 J, more preferably in the range from 1.90 to 2.70 J, most preferably in the range from 2.00 to 2.50 J.

It is preferred that the film (F) has a force at break, determined according to ASTM D5748, in the range from 46.0 to 70.0 N, more preferably in the range from 47.0 to 60.0 N, most preferably in the range from 48.0 to 55.0 N.

It is preferred that the polyethylene composition (PC) has an energy to max force determined according to ASTM D5748, in the range from 1.30 to 2.00 J, more preferably in the range from 1.33 to 1.80 J, most preferably in the range from 1.36 to 1.60 J.

It is preferred that the film (F) has a max force, determined according to ASTM D5748, in the range from 51.0 to 70.0 N, more preferably in the range from 51.5 to 65.0 N, most preferably in the range from 52.0 to 60.0 N.

It is preferred that the film (F) has a relative tear resistance in the transverse direction (Tear-TD), determined according to ISO 6383-2, in the range from 200 to 400 N/mm, more preferably in the range from 210 to 340 N/mm, most preferably in the range from 220 to 280 N/mm.

It is preferred that the film (F) has a clarity value, determined according to ASTM D1003, in the range from 15.0 to 50.0%, more preferably in the range from 20.0 to 40.0%, most preferably in the range from 25.0 to 30.0%.

It is preferred that the film (F) has a haze value, determined according to ASTM D1003, in the range from 40.0 to 75.0%, more preferably in the range from 50.0 to 72.0%, most preferably in the range from 60.0 to 69.0%.

It is preferred that the film (F) has a diffuse luminous transmittance, determined according to ASTM D1003 on a 40 μm blown film specimen, in the range from 40.0 to 70.0%, more preferably in the range from 50.0 to 68.0%, most preferably in the range from 57.0 to 66.0%.

It is preferred that the film (F) has a total luminous transmittance, determined according to ASTM D1003, in the range from 80.0 to 98.0%, more preferably in the range from 85.0 to 96.0%, most preferably in the range from 90.0 to 94.0%.

It is preferred that the film (F) has a sealing initiation temperature (SIT), determined according to the method specified in the measurement methods, in the range from 115 to 130 °C, more preferably in the range from 118 to 127 °C, most preferably in the range from 120 to 125 °C.

It is preferred that the film (F) has a hot tack force (HTF), determined according to the method specified in the measurement methods, in the range from 1.40 to 3.00 N, more preferably in the range from 1.50 to 2.50 N, most preferably in the range from 1.60 to 2.00 N.

It is preferred that the film (F) has a hot tack temperature (HTT), determined according to the method specified in the measurement methods, in the range from 115 to 130 °C, more preferably in the range from 118 to 127 °C, most preferably in the range from 120 to 125 °C.

## EXAMPLES

### 1. Measurement methods

The following definitions of terms and determination methods apply for the above general description of the invention including the claims as well as to the below examples unless otherwise defined.

### Melt Flow Rate

The melt flow rate (MFR) was determined according to ISO 1133 and is indicated in g/10 min. The MFR is an indication of the flowability, and hence the processability, of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

Calculation of $MFR_2$ of Component PE2 and of Fraction (PE1b)

$$logA = x \cdot logB + (1 - x) \cdot logC$$

$$C = 10^{\wedge \frac{(logA - x.logB)}{(1-x)}}$$

For Component PE2 (e.g. A2 or B2):

B = $MFR_2$ of Component (PE1)
C = $MFR_2$ of Component (PE2)
A = final $MFR_2$ (mixture) of PE
x = weight fraction of Component (PE1).

For Fraction PElb (e.g. A1b or B1b):

B = $MFR_2$ of 1st fraction (PE1a)
C = $MFR_2$ of 2nd fraction (PE1b)
A = final $MFR_2$ (mixture) of loop polymer (= PE1)
x = weight fraction of the 1st fraction (PE1a), relative to total amount of PE1.

**Density**

Density of the polymer was measured according to ISO 1183 and ISO 17855-2 for sample preparation and is given in $kg/m^3$.

**Molecular weight averages, molecular weight distribution (Mn, Mw, Mz, MWD)**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ASTM D 6474-12 using the following formulas:

$$M_n = \frac{\sum_{i=1}^{N} A_i}{\sum_{i=1}^{N} (A_i / M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with an IR5 from PolymerChar (Valencia, Spain) and with 3 x Agilent-PLgel Olexis and 1x Agilent-PLgel Olexis Guard columns was used. As solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using PolymerChar GPC-IR control software.

The column set was calibrated using universal calibration with 19 narrow MWD polystyrene (PS) standards in the range of 0.5 kg/mol to 11 500 kg/mol. The PS standards were dissolved at 160°C for 30 min. The conversion of the polystyrene peak molecular weight to polyolefin molecular weights is accomplished by using the Mark Houwink equation

and the following Mark Houwink constants:

$$K_{PS} = 19 \times 10^{-3}\ mL/g, \quad \alpha_{PS} = 0.655$$

$$K_{PE} = 39 \times 10^{-3}\ mL/g, \quad \alpha_{PE} = 0.725$$

$$K_{PP} = 19 \times 10^{-3}\ mL/g, \quad \alpha_{PP} = 0.725$$

A third order polynomial fit was used to fit the calibration data. The processing and integration of the peaks was done according to ISO 16014-1, meaning that in the low molecular weight region the elution of the last volume of the PS standard of 500 g/mol was chosen, when the polymer peak does not return to the baseline before the corresponded elution volume.

All samples were prepared in the concentration range of 0.5-1 mg/ml and dissolved at 160 °C for 2.5 hours for PP or 3 hours for PE under continuous gentle shaking.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the $_*B2$ sites at 39.8 ppm accounting for the number of reporting sites per comonomer:

$$B = I_{*B2}$$

If present the amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the ββB2B2 site at 24.6 ppm accounting for the number of reporting sites per comonomer:

$$BEB = 2 * I\beta\beta B2B2$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Sequences of BBB were not observed. The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Btotal + Htotal)$$

The amount isolated 1-hexene incorporated in EEHEE sequences was quantified using the integral of the *B4 sites at 38.3 ppm accounting for the number of reporting sites per comonomer:

$$H = I_{*B4}$$

If present the amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

If present the amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B\ [mol\text{-}\%] = 100 * fB$$

$$H\ [mol\text{-}\%] = 100 * fH$$

The weight percent comonomer incorporation is calculated from the mole fraction:

$$B\ [wt.\text{-}\%] = 100 * (\ fB * 56.11) / (\ (fB * 56.11) + (fH * 84.16) + ((1\text{-}(fB + fH)) * 28.05)\ )$$

$$H\ [wt.\text{-}\%] = 100 * (\ fH * 84.16\ ) / (\ (fB * 56.11) + (fH * 84.16) + ((1\text{-}(fB + fH)) * 28.05)\ )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443.
Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.

**DSC analysis, melting temperature ($T_m$) and crystallization temperature ($T_c$):** measured with a TA Instrument Q200 differential scanning calorimetry (DSC) on 5 to 7 mg samples. DSC is run according to ISO 11357 (2023) / part 3 /method C2 in a heat / cool / heat cycle with a scan rate of 10 °C/min in the temperature range of -30 to + 180 °C. Crystallization temperature ($T_c$) and crystallization enthalpy ($H_c$) are determined from the cooling step, while melting temperature ($T_m$) and melting enthalpy ($H_m$) are determined from the second heating step.

## Rheological parameters

The characterization of polymer melts by dynamic shear measurements complies with ISO standards 6721-1 and 6721-10. The measurements were performed on a rotational rheometer MCR501 from Anton Paar, equipped with a 25 mm parallel plate geometry. Measurements were undertaken on compression moulded plates using nitrogen atmosphere and setting a strain within the linear viscoelastic regime. The oscillatory shear tests were done at 190 °C applying a frequency range between 0.01 and 600 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta''$ and the loss tangent, tan $\eta$,

which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G^* = G' + iG'' \ [Pa] \qquad (5)$$

$$\eta^* = \eta' - i\eta'' \ [Pa \cdot s] \qquad (6)$$

$$\eta' = \frac{G''}{\omega} \ [Pa \cdot s] \qquad (7)$$

$$\eta'' = \frac{G'}{\omega} \ [Pa \cdot s] \qquad (8)$$

The determination of so-called Shear Thinning Index, which correlates with MWD and is independent of Mw, is done as described in equation 9.

$$SHI_{(x/y)} = \frac{\text{Eta* for } (G^* = x \text{ kPa})}{\text{Eta* for } (G^* = y \text{ kPa})} \qquad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa and the $SHI_{(5/200)}$ is defined by the value of the complex viscosity, in Pa s, determined for a value of G* equal to 5 kPa, divided by the value of the complex viscosity, in Pa s, determined for a value of G* equal to 200 kPa.

The values of storage modulus (G'), loss modulus (G"), complex modulus (G*) and complex viscosity (η*) were obtained as a function of frequency (ω).

Thereby, e.g. $\eta^*_{300rad/s}$ ($eta^*_{300rad/s}$) is used as abbreviation for the complex viscosity at the frequency of 300 rad/s and $\eta^*_{0.05rad/s}$ ($eta^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s. The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of *x* kPa and can be described by equation 10.

$$EI(x) = G' \ for \ (G'' = x \ kPa) \ [Pa] \qquad (10)$$

For example, the EI(5kPa) is the defined by the value of the storage modulus G', determined for a value of G" equal to 5 kPa.

The polydispersity index, *PI*, is defined by equation 11.

$$PI = \frac{10^5}{G'(\omega_{COP})}, \qquad \omega_{COP} = \omega \text{ for } (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.
[2] "The influence of molecular structure on some rheological properties of polyethylene", Heino, E.L., Borealis Polymers Oy, Porvoo, Finland, Annual Transactions of the Nordic Rheology Society, 1995.
[3] "Definition of terms relating to the non-ultimate mechanical properties of polymers", Pure & Appl. Chem., Vol. 70, No. 3, pp. 701-754, 1998.

**Gel index**

The cast film samples have been produced and optically examined on a small-scale laboratory cast film line with installed camera detection from Optical Control Systems GmbH.
The line consists of an extruder with a ∅25 mm screw with an LID ration of 25. The extruder temperature has been set at 220 °C, the melt temperature has been 235 °C. The extruder is followed by a die with a width of 150 mm and a fixed die gap of 0.5 mm. The film has been produced with a thickness of 70 μm. During the extrusion the chill-roll temperature has been set at 80 °C. The spots of the film have been detected and counted on 10 $m^2$ of the film during the extrusion process with reflected light and a 4096 pixel camera. During the measurement a LED light source is used. The resolution of the camera is x/y 25 μm on film. The gels, contaminations and others (defects and others) were divided into 4 size-classes (100-299 μm; 300-599 μm; 600-1000 μm; >1000 μm) and the results are presented as the number of defects per square meter (1/$m^2$). In general, gels are detected if the grey value of certain pixels is below 25% of the average grey value, while contaminations are detected below 10% of the average grey value. If the ratio between length and width of the detected spots is greater than 4.5, the spots are categorized as "Others". The "gel index" is calculated by multiplying the amount of gels or defects in each size class by certain factors for each size class (i.e. 0.1; 1; 5; 10, respectively) and adding these values together.

**Tensile modulus**

The tensile test was conducted according to ISO 527-3, moreover the modulus of elasticity (secant modulus between 0.05 % and 0.25 % elongation) is also determined. Type 2 (parallel-sided specimens) specimens were used.
During testing a specimen is extended along its major axis for determination of tensile properties at constant testspeed (speed of crosshead) until the specimen fracture. During this procedure the load sustained by the specimen and the elongation, which is measured by the crosshead, are measured.
Standard conditions:

Conditioning time: > 96 h at 50 ±2°C ±10 %rh
Test temperature: 23°C
Gripping distance: 100 mm
Gauge length: 100 mm
Secant modulus: 0.05 % - 0.25 %
Testspeed modulus: 1 mm/min
Testspeed: 200 mm/min

**Sealing initiation temperature (SIT)**

The method determines the sealing temperature range (sealing range) of polyethylene films, in particular blown films or cast films. The sealing temperature range is the temperature range, in which the films can be sealed according to conditions given below.
The lower limit (heat sealing initiation temperature (SIT)) is the sealing temperature at which a sealing strength of 5 N is achieved.
The measurement was done according to the slightly modified ASTM F1921 - 12, where the test parameters sealing pressure, sealing time, delay time and clamp separation rate have been modified. The determination of the force/temperature curve was continued until thermal failure of the film. The SIT was determined on a J&B Hot Tack Tester (model 4000MB) with a monolayer test blown film of 40 μm thickness with the following further parameters:

Conditioning time: > 96 h

Specimen width: 25 mm
Sealing pressure: 0.4 N/mm$^2$ (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C (i.e. the temperature range where the instrument can measure)
Sealing temperature interval: 5°C (the temperature interval is set by default to 5° C, but is reduced to 1 ° C when the curve shows a sharp increase or decrease in the force values between two temperature steps in order to represent a better curve profile)
Start temperature: 120°C
Grip separation rate: 42 mm/sec

**Hot Tack Force** was determined according to a modified method based on ASTM F1921 - 12 - Method B on a J&B Hot-Tack Tester on a 50 μm or 40 μm thickness film depending on the production method.

Specimen cutter:

A rotary drum cutter or a strip cutter is used to cut the specimens to a width of 25 mm (± 0,5 %).

Testing machine:

- Seal bar length: 50 mm
- Seal bar width: 5 mm
- Seal bar shape: flat
- Seal bar material: brass - nickel
- Coating of sealing bars: NIPTEF®
- Roughness of sealing bars: approx. 1 μm
- Force measurement: Piezo electric force transducer
- Temperature measurement: 2 separate heating systems

Thickness-measuring device: (accuracies according to ISO 4593:1993)

- Positionsanzeige (Heidenhain; Type: ND 280)
- Messtaster (Heidenhain; Type: MT 1281)

Measuring surfaces: plane/plane polished

Diameter of each face: 6,5 mm

Conditioning of samples / test specimens:

All test specimens have to be prepared in standard atmospheres for conditioning and testing at 23 °C (± 2 °C) and 50 % (± 10 %) relative humidity.

Minimum conditioning time of test specimen in standard atmosphere before testing: > 16 h. Minimum storage time between extrusion of film sample and testing: > 88 h.

Specimen preparation:

Specimen type: parallel cut stripes with 25 mm (width) x approx. 320 mm (length) taken over the whole width of sample.

Specimen orientation: Machine direction

Specimens (films) shall be free from dust, fingerprints, wrinkles, folds, shrivelling or other obvious imperfections. The

edges of cut specimens shall be smooth and free from notches.

Thickness measurement:

The thickness of the test specimen is measured in the sealing area.

Hot tack - sealing process:

The test shall be carried out in the same atmospheric conditions as the conditioning.

The prepared specimen strip is sealed by applying pressure from two heated flat seal jaws (NIPTEF®, 5*50mm) under defined conditions of temperature, contact time and pressure.

The specimen is folded between the sealing jaws with an automatic specimen-folding device. Sealing jaws close and after the pre-set sealing time elapse, the sealing jaws open and the heat seal is complete. The selected cooling time elapses and the lower sample clamp moves down, pulling the specimen along. In that step, the force transducer, attached to the upper sample clamp, measures the force. Afterwards the failure mode is determined visually.

**Standard test conditions:**

- Sealing time (1 s)
- Sealing pressure (0,15 N/mm$^2$)
- Delay time (0,2 s)
- Clamp separation rate (200 mm/s)

Number of test specimens: at least 3 specimens per temperature
In case the measured values at one temperature step show significant deviation, one additional specimen, at that temperature step, is tested to ensure the data points are outliers. However, the number of specimens should always be uneven but the total should not exceed 7 tested specimens. The outlier is allowed only to be eliminated from the measurement once it is confirmed; whereas, deviation caused by other reasons must be considered.

Temperature steps/interval: ramp upwards by 5 °C
(2 °C upward ramp in case of sharp increase / decrease between two temperature steps)
Start measuring at two temperature steps below 0,2 - 0,3 N.

Stop measuring at failure mode burn-through.

It is allowed to have one failure mode with burn-through and two other failure modes, *only* with one additional temperature step.

A typical hot-tack curve may require 25 to 50 specimens of each material.

Results:

The output of this method is a hot-tack curve. The interpretation of hot-tack curves has always rested on the relationship between sealing force and sealing temperature.

Hot-Tack is defined as the highest force with failure mode "peel". Also allowed are two "peel" failure modes and any other failure mode (except burn-through failure mode) when three specimens / temperature step are used.

Deviating from ASTM F1921 - 12 Chapter 9, the test is performed after a cooling time of 200 ms. The end of the measurement described in chapter 9.8 of ASTM F1921 - 12 (test stop after determination of the Hot Tack) is not considered. End of test is instead considered after the thermal failure of the film. In addition to failure mode evaluations described in the standard, additional failure modes are used.

**Optical properties (haze, clarity, total luminous transmittance, total diffuse transmittance)**

The optical properties were determined according to ASTM D1003-00 directly on the film produced in the experimental section.

**Puncture properties (Puncture Energy to Peak, Puncture Peak Force, Total Penetration Energy)**

Puncture properties were measured according to ISO 7765-2 on the films produced in the experimental section.

### Puncture Resistance

Protrusion Puncture Resistance testing is conducted according to ASTM D5748 on the multilayer films produced in the experimental section. This test method determines the resistance of a film sample to the penetration of a probe with specific size of 19mm diameter pear-shaped teflon coated at a standard low rate, a single test velocity (250 mm/min). Performed at standard conditions, the test method imparts a biaxial stress loading. Cut the film specimens 200mm × 200mm to fit into the jig and conditioning done at 23±2$^{0}$C at 50±10% relative humidity.

The Puncture Resistance Force (N) is the maximum force or highest force observed during the test and Puncture Resistance Energy to break (J) is the energy used until the probe breaks the test specimen. The force is measured with a 500 N load cell, the elongation (deformation) is measured by a crosshead.

### Tear resistance (Elmendorf)

Elmendorf tear strength in machine direction (MD) and in transverse direction (TD) were measured on the film according to ISO 6383-2 and reported in Newton (N). Relative tear resistance is given in Newton per mm (N/mm), wherein the tear resistance is divided by the thickness of the film.

## 2. Examples

### 2.1 Catalyst preparation for CAT1 for polyethylene A

*Loading of $SiO_2$:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt.-% MAO in toluene (14.1 kg) was added into another reactor from a balance followed by toluene (4.0 kg) at 25°C (oil circulation temp) and stirring with 95 rpm. Stirring speed was increased from 95 rpm -> 200 rpm after toluene addition, stirring time was 30 min. Metallocene Rac-dimethylsilanediylbis {2-(5-(trimethylsilyl)furan-2-yl)-4,5-dimethylcyclopentadien-1-yl} zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour. After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

### 2.2 Polymerization:

Borstar pilot plant with a 3-reactor set-up (loop1 - loop2 - GPR 1) and a prepolymerization loop reactor.

**Table 1:** Polymerization conditions for polyethylene A

| | A |
|---|---|
| **Catalyst** | CAT1 |
| **Prepoly reactor** | |
| Temp. (°C) | 50 |
| Press. (kPa) | 5358 |
| C2 (kg/h) | 4.0 |
| H2(g/h) | 0.04 |
| C4 (g/h) | 107.5 |
| Split (wt.-%) | 4.2 |
| **loop 1 Fraction (A1a)** | |
| Temp. (°C) | 85 |
| Press. (kPa) | 5362 |
| C2 conc. (mol-%) | 5.4 |
| H2/C2 ratio (mol/kmol) | 0.92 |
| C4/C2 ratio (mol/kmol) | 6.9 |
| Split (wt.-%) | 18.4 |
| Density (kg/$m^3$) of loop 1 material (fraction (A1a) | 965.1 |
| $MFR_2$ (g/10 min) of loop 1 material (fraction (A1a) | 208 |
| **loop 2 Fraction (A1b)** | |
| Temp. (°C) | 85 |
| Press. (kPa) | 5217 |
| C2 conc. (mol-%) | 5.6 |
| H2/C2 ratio (mol/kmol) | 0.84 |
| C4/C2 ratio (mol/kmol) | 6.9 |
| Split (wt.-%) | 27.0 |
| Density (kg/$m^3$) after loop 2 (component (A1)) | 970.3 |
| $MFR_2$ (g/10 min) after loop 2 (component (A1)) | 336 |
| $MFR_2$ (g/10 min) of loop 2 material (fraction (A1b)) | 540 |
| Density (kg/$m^3$) of loop 2 material (fraction (A1b)) | 975.5 |

| GPR Fraction (A2) | |
|---|---|
| Temp. (°C) | 80 |
| Press. (kPa) | 2000 |
| H2/C2 ratio (mol/kmol) | 0.26 |
| C6/C2 ratio (mol/kmol) | 4.47 |
| Split (wt.-%) | 50.3 |
| $MFR_2$ (g/10 min) of GPR material (Component (A2)) | 0.00008 |
| Density (kg/$m^3$) of GPR material (Component (A2)) | 910.7 |
| $MFR_2$(A1)/$MFR_2$(A2) | $4.2 \times 10^6$ |
| Dens(A1)-dens(A2) (kg/$m^3$) | 59.6 |

The polymer powder of polyethylene A was mixed with 0.027 wt.-% FX 5922 (3M Dynamar Polymer Processing Additive) and 0.24 wt.-% Irganox B 561 (BASF), where wt.-% are relative to total weight of composition (the sum of PE powder + additive = 100%) compounded and extruded on a NT extruder. The melt temperature was 235 °C, production rate was 300 kg/h.

**Table 2:** Polymer properties of polyethylene A

| | | A |
|---|---|---|
| $MFR_2$ (final pellets) | [g/10 min] | 0.16 |
| $MFR_5$ | [g/10 min] | 0.64 |
| $MFR_{21}$ | [g/10 min] | 16 |
| $FRR_{21/2}$ ($MFR_{21}$/$MFR_2$) | [- ] | 95.9 |
| Density | [kg/$m^3$] | 940.3 |
| Mz | [g/mol] | 497500 |
| Mw | [g/mol] | 152000 |
| Mn | [g/mol] | 11800 |
| Mz/Mw | [-] | 3.3 |
| Mw/Mn | [-] | 12.9 |
| FRR/(Mz/Mw) | [-] | 29.3 |
| FRR/(Mw/Mn) | [-] | 7.4 |
| C4 | [mol-%] | 0.0* |
| C6 | [mol-%] | 1.0 |
| C6 in PE2 | [mol-%] | 2.0 |
| *below the detection limit | | |

### 2.3 Compounding

For comparative example CE1, the compounded polyethylene A was used "as is".

For the inventive examples, polyethylene A was blended with 5.0 and 10.0 wt.-% (for IE1 and IE2 respectively) of a further polyethylene B.

Polyethylene B corresponds to znLLDPE-2 of EP 4 116 359 A1, which is produced in the presence of a Ziegler-Natta catalyst (the catalyst described as Example 1 of EP 1 378 528 A1) and contains two homopolymer fractions, which together form B1, and a C2C4C6 terpolymer fraction B2. The properties of B1, B2 and B are given in Table 3.

**Table 3:** Polymer properties of polyethylene B

| | | B |
|---|---|---|
| Split (B 1) | [wt.-%] | 46.0 |
| Split (B2) | [wt.-%] | 54.0 |
| dens (B1) | [kg/m$^3$] | 970.0 |
| dens (B2) | [kg/m$^3$] | 916.3 |
| dens (B) | [kg/m$^3$] | 941.0 |
| $MFR_2$ (B1) | [g/10 min] | 420 |
| $MFR_2$ (B2) | [g/10 min] | 0.001 |
| $MFR_2$ (B) | [g/10 min] | 0.38 |
| $MFR_5$ | [g/10 min] | 1.58 |
| $MFR_{21}$ | [g/10 min] | 35.2 |
| $FRR_{21/2}$ ($MFR_{21}$/$MFR_2$) | [- ] | 92.6 |
| C4 | [mol-%] | 0.46 |
| C6 | [mol-%] | 1.06 |
| C6 in B2 | [mol-%] | 2.01 |
| $MFR_2$(B1)/$MFR_2$(B2) | [-] | $0.42\times10^6$ |
| Dens(B1)-dens(B2) | [kg/m$^3$] | 53.7 |
| *below the detection limit | | |

**2.4 Films**

Films samples were produced from CE1, IE1 and IE2 on a small-scale laboratory blown film line from company COLLIN Lab & Pilot Solutions GmbH.

The line consists of an extruder with a ∅ 30 mm screw with an LID ration of 30. The extruder temperature has been set at 200°C, the melt temperature was 202 - 205°C and has been recorded after 45 min of process stabilization. The extruder is followed by a blow head which is equipped with a ∅ 50 mm annular die with a die gap of 1.5 mm. The line has been run at a speed of 7,6 m/min. The blow up ratio (BUR) of the film bubble was 2.5:1. The film was produced with a thickness of 40 μm.

The films produced were used for the following mechanical testing.

**Table 4:** Composition properties of CE1 and IE1

| | | CE1 | IE1 | IE2 |
|---|---|---|---|---|
| **Composition** | | | | |
| $MFR_2$ | [g/10 min] | 0.16 | 0.16 | 0.19 |
| $MFR_5$ | [g/10 min] | 0.64 | 0.65 | 1.06 |
| $MFR_{21}$ | [g/10 min] | 15.3 | 17.0 | 17.6 |
| Mn | [g/mol] | 11,800 | 11,300 | 10,900 |
| Mw | [g/mol] | 152,000 | 155,000 | 153,000 |
| Mz | [g/mol] | 497,500 | 533,500 | 548,000 |
| Mw/Mn | [-] | 12.9 | 13.8 | 14.1 |
| Mz/Mn | [-] | 42.2 | 47.4 | 50.3 |
| Density | [kg/m$^3$] | 940.3 | 940.7 | 940.7 |
| Tm | [°C] | 128.8 | 128.6 | 127.9 |
| ΔHm | [J/g] | 170.6 | 174.1 | 175.8 |

(continued)

| | | CE1 | IE1 | IE2 |
|---|---|---|---|---|
| **Composition** | | | | |
| Tc | [°C] | 113.7 | 114.4 | 115.1 |
| $\Delta$Hc | [J/g] | 176.2 | 175.8 | 179.7 |
| $SHI_{2.7/210}$ | [-] | 39.4 | 34.5 | 40.7 |
| $SHI_{5/300}$ | [-] | 61.3 | 56.0 | 70.6 |
| $eta_{0.05}$ | [Pa.s] | 82,700 | 75,200 | 64,800 |
| $eta_{300}$ | [Pa.s] | 1070 | 1060 | 930 |
| Gel index | [-] | 31,300 | 16,900 | 22,300 |
| **Film** | | | | |
| Melt pressure (in extruder) | [bar] | 391 | 311 | 302 |
| Tens Mod (MD) | [MPa] | 390 | 550 | 570 |
| Tens Mod (TD) | [MPa] | 600 | 700 | 710 |
| SIT | [°C] | 123 | 122 | 123 |
| Hot Tack Temp | [°C] | 122 | 122 | 122 |
| Hot Tack Force | [N] | 1.74 | 1.93 | 1.80 |
| Clarity | [%] | 14.3 | 25.8 | 27.4 |
| Haze | [%] | 76.7 | 67.4 | 65.9 |
| Diffuse luminous transmittance | [%] | 70.4 | 62.0 | 60.7 |
| Total luminous transmittance | [%] | 91.7 | 92.0 | 92.0 |
| Tear resistance (MD) | [N] | 12.0 | 11.7 | 12.7 |
| Relative tear resistance (MD) | [N/mm] | 1.32 | 1.13 | 1.21 |
| Tear resistance (TD) | [N] | 189 | 252 | 221 |
| Relative tear resistance (TD) | [N/mm] | 10.1 | 11.5 | 10.5 |
| Instrumented Puncture Test | | | | |
| Normalised energy to peak force | [J/mm] | 18.9 | 19.7 | 24.1 |
| Normalised peak force | [N/mm] | 1540 | 1520 | 1620 |
| Normalised total penetration energy | [J/mm] | 22.9 | 22.2 | 25.6 |
| Protrusion Puncture Test | | | | |
| Energy to break | [J] | 1.80 | 2.29 | 2.10 |
| Energy to max force | [J] | 1.29 | 1.71 | 1.61 |
| Force at break | [N] | 45.9 | 48.6 | 48.7 |
| Max force | [N] | 50.7 | 54.0 | 52.5 |

As can be seen from Table 4, the addition of small amounts of polyethylene B improves the compatibility between the extremely high molecular weight A2 and the low molecular weight A1, resulting in reduced melt pressure during extrusion, improved Tensile Modulus (MD and TD), improved haze/clarity/DLT, improved puncture resistance and tear resistance, and a much lower gel index.

## Claims

1. A polyethylene composition (PC) comprising:

a) a first polymer of ethylene (A) that consists of:

i) an amount in the range from 40.0 to 60.0 wt.-%, relative to the total weight of the polymer of ethylene (A), of a first ethylene polymer fraction (A1) having a density, determined according to ISO 1183, in the range from 955 to 975 kg/$m^3$ and a melt flow rate ($MFR_2$), determined according to ISO 1133 at a load of 2.16 kg and at a temperature of 190 °C, in the range from 100 to 600 g/10 min; and
ii) an amount in the range from 40.0 to 60.0 wt.-%, relative to the total weight of the polymer of ethylene (A), of a second ethylene polymer fraction (A2) having a density, determined according to ISO 1183, in the range from 900 to 925 kg/$m^3$ and a melt flow rate ($MFR_2$), determined according to ISO 1133 at a load of 2.16 kg and at a temperature of 190 °C, in the range from 0.00001 to 0.008 g/10 min,
wherein the polymer of ethylene (A) has a density, determined according to ISO 1183, in the range from 932 to 955 kg/$m^3$ and a melt flow rate ($MFR_2$), determined according to ISO 1133 at a load of 2.16 kg and at a temperature of 190 °C, in the range from 0.05 to 0.80 g/10 min,
wherein the melt flow rate ($MFR_2$) of the first ethylene polymer fraction (A1) divided by the melt flow rate ($MFR_2$) of the second ethylene polymer fraction (A2) [$MFR_2(A1) \div MFR_2(A2)$] is in the range from $2.0\times10^6$ to $60\times10^6$, and

b) a second polymer of ethylene (B) that consists of:

i) an amount in the range from 30.0 to 70.0 wt.-%, relative to the total weight of the polymer of ethylene (B), of a first ethylene polymer fraction (B1) having a density, determined according to ISO 1183, in the range from 955 to 975 kg/$m^3$ and a melt flow rate ($MFR_2$), determined according to ISO 1133 at a load of 2.16 kg and at a temperature of 190 °C; and
ii) an amount in the range from 30.0 to 70.0 wt.-%, relative to the total weight of the polymer of ethylene (B), of a second ethylene polymer fraction (B2) having a density, determined according to ISO 1183, in the range from 900 to 925 kg/$m^3$ and a melt flow rate ($MFR_2$), determined according to ISO 1133 at a load of 2.16 kg and at a temperature of 190 °C,
wherein the polymer of ethylene (B) has a density, determined according to ISO 1183, in the range from 932 to 955 kg/$m^3$ and a melt flow rate ($MFR_2$), determined according to ISO 1133 at a load of 2.16 kg and at a temperature of 190 °C, in the range from 0.05 to 3.0 g/10 min,
wherein the melt flow rate ($MFR_2$) of the first ethylene polymer fraction (B1) divided by the melt flow rate ($MFR_2$) of the second ethylene polymer fraction (B2) [$MFR_2(B1) \div MFR_2(B2)$] is in the range from $1.0 \times10^0$ to $1.5\times10^6$,

wherein the combined content of the first polymer of ethylene (A) and the second polymer of ethylene (B) is at least 90.0 wt.-%, relative to the total weight of the polyethylene composition (PC).

**2.** The polyethylene composition (PC) according to claim 1, wherein the density of the first ethylene polymer fraction (A1) minus the density of the second ethylene polymer fraction (A2) [dens(A1) - dens(A2)] is in the range from 50.0 kg/$m^3$ to 75.0 kg/$m^3$.

**3.** The polyethylene composition (PC) according to any one of the preceding claims, wherein the first polymer of ethylene (A) has one or more, preferably both, of the following properties:

a) a melt flow rate ($MFR_{21}$), determined according to ISO 1133 at a load of 21.6 kg and at a temperature of 190 °C, in the range from 5.0 to 50.0 g/10 min, more preferably in the range from 8.0 to 40.0 g/10 min, yet more preferably in the range from 10.0 to 30.0 g/10 min, most preferably in the range from 12.0 to 20.0 g/10 min;
b) a flow rate ratio ($FRR_{21/2}$), determined according to ISO 1133 at a temperature of 190 °C and at loads of 21.6 kg and 2.16 kg, in the range from 50 to 150, more preferably in the range from 60 to 120, most preferably in the range from 70 to 110;
c) a 1-butene (C4) content, determined by quantitative $^{13}C$-NMR spectroscopic analysis, in the range from 0.0 to 0.5 mol-%, more preferably in the range from 0.0 to 0.3 mol-%, most preferably in the range from 0.0 to 0.1 mol-%; and
d) a 1-hexene (C6) content, determined by quantitative $^{13}C$-NMR spectroscopic analysis, in the range from 0.5 to 2.0 mol-%, more preferably in the range from 0.7 to 1.5 mol-%, most preferably in the range from 0.9 to 1.2 mol-%.

**4.** The polyethylene composition (PC) according to any one of the preceding claims, wherein:

a) the first ethylene polymer fraction (A1) is a homopolymer of ethylene or a copolymer of ethylene and one or more comonomers selected from the group consisting of $C_4$ to $C_8$ alpha olefins, wherein the first ethylene polymer fraction (A1) has a comonomer content, determined by quantitative $^{13}C$-NMR spectroscopic analysis, in the range from 0.0 to 0.5 mol-%, more preferably in the range from 0.0 to 0.3 mol-%, most preferably in the range from 0.0 to 0.2 mol-%; and

b) the second ethylene polymer fraction (A2) is a copolymer of ethylene and one or more comonomers selected from the group consisting of $C_4$ to $C_8$ alpha olefins, wherein the second ethylene polymer fraction (A2) has a comonomer content, determined by quantitative $^{13}C$-NMR spectroscopic analysis, in the range from 1.0 to 4.0 mol-%, more preferably in the range from 1.4 to 3.0 mol-%, most preferably in the range from 1.8 to 2.4 mol-%.

**5.** The polyethylene composition (PC) according to any one of the preceding claims, wherein the first polymer of ethylene (A) has been produced in the presence of a single-site catalyst.

**6.** The polyethylene composition (PC) according to any one of the preceding claims, wherein:

a) the first ethylene polymer fraction (B1) has a melt flow rate ($MFR_2$), determined according to ISO 1133 at a load of 2.16 kg and at a temperature of 190 °C, in the range from 100 to 600 g/10 min, more preferably in the range from 200 to 550 g/10 min, yet more preferably in the range from 300 to 500 g/10 min, even more preferably in the range from 350 to 480 g/10 min, most preferably in the range from 370 to470 g/10 min; and/or

b) the second ethylene polymer fraction (B2) has a melt flow rate ($MFR_2$), determined according to ISO 1133 at a load of 2.16 kg and at a temperature of 190 °C, in the range from 0.00001 to 0.0080 g/10 min, more preferably in the range from 0.0001 to 0.0060 g/10 min, yet more preferably in the range from 0.0003 to 0.0040 g/10 min, most preferably in the range from 0.0005 to 0.0020 g/10 min.

**7.** The polyethylene composition (PC) according to any one of the preceding claims, wherein the density of the first ethylene polymer fraction (B1) minus the density of the second ethylene polymer fraction (B2) [dens(B1) - dens(B2)] is in the range from 50.0 kg/m$^3$ to 75.0 kg/m$^3$.

**8.** The polyethylene composition (PC) according to any one of the preceding claims, wherein the second polymer of ethylene (B) has one or more, preferably both, of the following properties:

a) a melt flow rate ($MFR_{21}$), determined according to ISO 1133 at a load of 21.6 kg and at a temperature of 190 °C, in the range from 5.0 to 100.0 g/10 min, more preferably in the range from 10.0 to 80.0 g/10 min, yet more preferably in the range from 20.0 to 60.0 g/10 min, most preferably in the range from 30.0 to 40.0 g/10 min;

b) a flow rate ratio ($FRR_{21/2}$), determined according to ISO 1133 at a temperature of 190 °C and at loads of 21.6 kg and 2.16 kg, in the range from 50 to 150, more preferably in the range from 60 to 120, most preferably in the range from 70 to 110;

c) a 1-butene (C4) content, determined by quantitative $^{13}C$-NMR spectroscopic analysis, in the range from 0.1 to 1.5 mol-%, more preferably in the range from 0.2 to 1.0 mol-%, most preferably in the range from 0.3 to 0.7 mol-%; and

d) a 1-hexene (C6) content, determined by quantitative $^{13}C$-NMR spectroscopic analysis, in the range from 0.5 to 2.0 mol-%, more preferably in the range from 0.7 to 1.5 mol-%, most preferably in the range from 0.9 to 1.2 mol-%.

**9.** The polyethylene composition (PC) according to any one of the preceding claims, wherein:

a) the first ethylene polymer fraction (B1) is a homopolymer of ethylene or a copolymer of ethylene and one or more comonomers selected from the group consisting of $C_4$ to Cs alpha olefins, wherein the first ethylene polymer fraction (B1) has a comonomer content, determined by quantitative $^{13}C$-NMR spectroscopic analysis, in the range from 0.0 to 0.5 mol-%, more preferably in the range from 0.0 to 0.3 mol-%, most preferably in the range from 0.0 to 0.1 mol-%; and

b) the second ethylene polymer fraction (B2) is a copolymer of ethylene and one or more comonomers selected from the group consisting of $C_4$ to Cs alpha olefins, wherein the second ethylene polymer fraction (B2) has a comonomer content, determined by quantitative $^{13}C$-NMR spectroscopic analysis, in the range from 1.0 to 4.0 mol-%, more preferably in the range from 1.4 to 3.0 mol-%, most preferably in the range from 1.8 to 2.4 mol-%.

**10.** The polyethylene composition (PC) according to any one of the preceding claims, wherein the second polymer of ethylene (B) has been produced in the presence of a Ziegler Natta catalyst.

**11.** The polyethylene composition (PC) according to any one of the preceding claims, comprising, more preferably consisting of:

a) from 80.0 to 99.0 wt.-%, more preferably from 85.0 to 97.0 wt.-%, most preferably from 88.0 to 96.0 wt.-%, relative to the total weight of the polyethylene composition (PC), of the first polymer of ethylene (A)
b) from 1.0 to 20.0 wt.-%, more preferably from 3.0 to 15.0 wt.-%, most preferably from 4.0 to 12.0 wt.-%, relative to the total weight of the polyethylene composition (PC), of the second polymer of ethylene (B); and
c) optionally, from 0.0 to 10.0 wt.-%, more preferably from 0.0 to 5.0 wt.-%, most preferably from 0.0 to 3.0 wt.-%, relative to the total weight of the polyethylene composition (PC), of one or more further additives (Ad).

**12.** The polyethylene composition (PC) according to any one of the preceding claims, having a gel index, determined according to the method given in the measurement methods, in the range from 5,000 to 30,000, more preferably in the range from 10,000 to 27,000, most preferably in the range from 15,000 to 24,000.

**13.** The polyethylene composition (PC) according to any one of the preceding claims, having one or more, preferably all, of the following properties:

a) a tensile modulus in the machine direction (TM-MD), determined according to ISO 527-3 on a 40 μm blown film specimen, in the range from 400 to 900 MPa, more preferably in the range from 450 to 800 MPa, most preferably in the range from 500 to 700 MPa;
b) a tensile modulus in the transverse direction (TM-TD), determined according to ISO 527-3 on a 40 μm blown film specimen, in the range from 650 to 1500 MPa, more preferably in the range from 670 to 1200 MPa, most preferably in the range from 680 to 1000 MPa;
c) a normalised energy to peak force, determined according to ISO 7765-2 on a 40 μm blown film specimen, in the range from 12.0 to 35.0 J/mm, more preferably in the range from 17.0 to 30.0 J/mm, most preferably in the range from 20.0 to 27.0 J/mm;
d) an energy to break, determined according to ASTM D5748 on a 40 μm blown film specimen, in the range from 1.80 to 3.00 J, more preferably in the range from 1.90 to 2.70 J, most preferably in the range from 2.00 to 2.50 J;
e) a force at break, determined according to ASTM D5748 on a 40 μm blown film specimen, in the range from 46.0 to 70.0 N, more preferably in the range from 47.0 to 60.0 N, most preferably in the range from 48.0 to 55.0 N;
f) an energy to max force determined according to ASTM D5748 on a 40 μm blown film specimen, in the range from 1.30 to 2.00 J, more preferably in the range from 1.33 to 1.80 J, most preferably in the range from 1.36 to 1.60 J;
g) a max force, determined according to ASTM D5748 on a 40 μm blown film specimen, in the range from 51.0 to 70.0 N, more preferably in the range from 51.5 to 65.0 N, most preferably in the range from 52.0 to 60.0 N; and
h) a relative tear resistance in the transverse direction (Tear-TD), determined according to ISO 6383-2 on a 40 μm blown film specimen, in the range from 200 to 400 N/mm, more preferably in the range from 210 to 340 N/mm, most preferably in the range from 220 to 280 N/mm.

**14.** The polyethylene composition (PC) according to any one of the preceding claims, having one or more, preferably all, of the following properties:

a) a clarity value, determined according to ASTM D1003 on a 40 μm blown film specimen, in the range from 15.0 to 50.0%, more preferably in the range from 20.0 to 40.0%, most preferably in the range from 25.0 to 30.0%;
b) haze value, determined according to ASTM D1003 on a 40 μm blown film specimen, in the range from 40.0 to 75.0%, more preferably in the range from 50.0 to 72.0%, most preferably in the range from 60.0 to 69.0%;
c) diffuse luminous transmittance, determined according to ASTM D1003 on a 40 μm blown film specimen, in the range from 40.0 to 70.0%, more preferably in the range from 50.0 to 68.0%, most preferably in the range from 57.0 to 66.0%; and
d) a total luminous transmittance, determined according to ASTM D1003 on a 40 μm blown film specimen, in the range from 80.0 to 98.0%, more preferably in the range from 85.0 to 96.0%, most preferably in the range from 90.0 to 94.0%

**15.** A film (F) comprising at least 90 wt.-%, relative to the total weight of the film (F), of the polyethylene composition (PC) according to any one of claims 1 to 14.

Europäisches Patentamt
European Patent Office
Office européen des brevets

# EUROPEAN SEARCH REPORT

Application Number
EP 25 15 4917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/064380 A1 (THAI POLYETHYLENE CO LTD [TH]; SCG CHEMICALS CO LTD [TH]) 2 April 2020 (2020-04-02) | 1-15 | INV. C08F210/16 C08F4/659 C08L23/0807 |
| Y | * claims 1, 5 * ----- | 1-15 | |
| Y | WO 2023/280799 A1 (BOREALIS AG [AT]) 12 January 2023 (2023-01-12) * claim 1; example all; tables 1-4; compounds znLLDPE-2 * ----- | 1-15 | |
| Y | WO 2023/217751 A1 (BOREALIS AG [AT]) 16 November 2023 (2023-11-16) * claim 1; table 2; compounds PDPE-1 * ----- | 1-15 | |
| Y | EP 4 239 015 A1 (BOREALIS AG [AT]) 6 September 2023 (2023-09-06) * claim 1; table 1 * ----- | 1-15 | |
| | | | TECHNICAL FIELDS SEARCHED (IPC) |
| | | | C08F C08L |

The present search report has been drawn up for all claims

1

| Place of search | Date of completion of the search | Examiner |
|---|---|---|
| Munich | 10 July 2025 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 15 4917

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2025

| Patent document cited in search report | Publication date | Patent family member(s) | Publication date |
|---|---|---|---|
| WO 2020064380 A1 | 02-04-2020 | AU 2019348318 A1 | 08-04-2021 |
| | | BR 112021004793 A2 | 03-08-2021 |
| | | CN 112839991 A | 25-05-2021 |
| | | EP 3626774 A1 | 25-03-2020 |
| | | JP 7319357 B2 | 01-08-2023 |
| | | JP 2022502539 A | 11-01-2022 |
| | | KR 20210064223 A | 02-06-2021 |
| | | US 2022033630 A1 | 03-02-2022 |
| | | WO 2020064380 A1 | 02-04-2020 |
| WO 2023280799 A1 | 12-01-2023 | CN 117597383 A | 23-02-2024 |
| | | EP 4116359 A1 | 11-01-2023 |
| | | ES 2986541 T3 | 11-11-2024 |
| | | US 2024262969 A1 | 08-08-2024 |
| | | WO 2023280799 A1 | 12-01-2023 |
| WO 2023217751 A1 | 16-11-2023 | CN 119173571 A | 20-12-2024 |
| | | EP 4522687 A1 | 19-03-2025 |
| | | WO 2023217751 A1 | 16-11-2023 |
| EP 4239015 A1 | 06-09-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 4116359 A1
- EP 1378528 A1


### Non-patent literature cited in the description


- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253
- **HEINO, E.L.** ; **LEHTINEN, A.** ; **TANNER J.** ; **SEPPÄLÄ, J.** Rheological characterization of polyethylene fractions. *Theor. Appl. Rheol., Proc. Int. Congr. Rheol, 11th*, 1992, vol. 1, 360-362
- **HEINO, E.L.** The influence of molecular structure on some rheological properties of polyethylene. *Annual Transactions of the Nordic Rheology Society*, 1995
- Definition of terms relating to the non-ultimate mechanical properties of polymers. *Pure & Appl. Chem.*, 1998, vol. 70 (3), 701-754